# EUROPÄISCHE PATENTSCHRIFT

(11) **EP 1 257 406 B1**
(45) Veröffentlichungstag und Bekanntmachung des Hinweises auf die Patenterteilung: **13.08.2003**
(21) Anmeldenummer: 01906052.4
(22) Anmeldetag: 19.02.2001
(51) Int. Cl.: B29C 49/42, B29C 49/12

(54) **VERFAHREN UND VORRICHTUNG ZUR HERSTELLUNG EINES GEBLASENEN BEHÄLTERS**
METHOD AND DEVICE FOR PRODUCTION OF A BLOWN CONTAINER
PROCEDE ET DISPOSITIF DE PRODUCTION D'UN RECIPIENT SOUFFLE

(30) Priorität: 22.02.2000 CH 336002000
(43) Veröffentlichungstag der Anmeldung: 20.11.2002
(73) Patentinhaber: Alpla-Werke Alwin Lehner GmbH und Co.KG, 6971 Hard (AT)
(72) Erfinder: MENNEL, Walter, A-6890 Lustenau (AT)
(74) Vertreter: Walder, Martin Bernhard (CH)
(86) Internationale Anmeldenummer: IB0100278
(87) Internationale Veröffentlichungsnummer: WO01062470

(56) Entgegenhaltungen:
- EP-A- 0 361 141
- FR-A- 1 441 768
- US-A- 3 608 017
- US-A- 5 069 614
- PATENT ABSTRACTS OF JAPAN vol. 014, no. 384 (M-1013), 20. August 1990 (1990-08-20) & JP 02 143831 A (DAINIPPON PRINTING CO LTD), 1. Juni 1990 (1990-06-01)
- PATENT ABSTRACTS OF JAPAN vol. 015, no. 235 (M-1125), 17. Juni 1991 (1991-06-17) & JP 03 073316 A (DAINIPPON PRINTING CO LTD), 28. März 1991 (1991-03-28)

## Beschreibung

Die Erfindung betrifft Verfahren und Vorrichtung zur Herstellung eines Behälters mit einer Öffnung, deren Öffnungsachse in einem Winkel zur Behälterachse steht. Bei dem Verfahren wird ein Preformling in eine Blasform eingesetzt und der Behälterteil des Preformlings in der Blasform durch Aufblasen verformt. Eine Blasform weist einen der Behälteraussenform entsprechenden Blasforminnenraum in einem Blasformkörper und einen Anschlagbereich für einen Einspannbereich an einem in die Blasform einsetzbaren Preformling auf. Eine Blasvorrichtung benötigt neben einer solchen Blasform eine gegenüber dem Preformling dichtbare Blasdüse. Ferner weisen solche Blasvorrichtungen in der Regel einen Streckdorn zum Strecken des Preformlings auf.

Aus Kunststoff-Preformlingen geblasene Flaschen und Behälter weisen in der Regel eine Öffnung auf, deren Achse mit der Behälterachse zusammenfällt oder parallel dazu angeordnet ist. Der Preformling wird mit einer Zange in die orthogonal zum Blasformkörper angeordnete Öffnung in den Blasforminnenraum eingeführt und liegt mit einem Einspannbereich im Halsbereich an der Blasform an. Die Einführrichtung des Preformlings liegt dabei parallel zu einer Blasformkörperachse. Die Wandung eines Behälterteils des Preformlings liegt in der Folge ringsum in einem etwa gleichmässigen Abstand zur Blasforminnenraumbegrenzung. Mit einer Blasdüse wird nun der Einspannbereich angepresst und der Preformling aufgeblasen, bis die Kunststoffwandung die Form des Blasforminnenraums aufweist. Dazu wird meist ein Streckdorn in den Preformling eingeführt und der Preformling damit in der Richtung seiner Behälterachse gestreckt. Praktisch gleichzeitig wird der Preformling aufgeblasen, und so das Material der Preformling-Wandung aufgedehnt.

Soll von der Regel des Zusammenfallens von Öffnungsachse und Behälterachse abgewichen werden, muss aufgrund von unterschiedlichen Ausdehnungsverhältnissen in verschiedenen Bereichen der Wandung des Preformlings mit Unregelmässigkeiten in der Wandungsstärke gerechnet werden. Bei parallelen Achsen kann einer ungleichmässigen Dehnung der Preformlingwandung in engen Grenzen zum Beispiel durch gezieltes Aufwärmen des Preformlings entgegengewirkt werden. Steht jedoch die Öffnungsachse gar in einem Winkel zur Behälterachse der Blasform, sind die Abstände zwischen der Wandung des eingeführten Preformlings und der Innenraumbegrenzung der Blasform mit zunehmendem Abstand von der Öffnung zunehmend unterschiedlich. Ein Erreichen einer annähernd gleichmässigen Wandstärke des fertigen Behälters scheint mit herkömmlichen rotationssymmetrischen Preformlingen mit gleichmässig dicker Wandung und einem herkömmlichen Blasverfahren oder Streck- und Blasverfahren nicht möglich zu sein.

Aus der EP-A-0 361 141 ist ein Verfahren und eine Vorrichtung zum Formblasen eines Kunststoffbehälters mit einer Öffnungsachse, welche in einem Winkel zur Behälterachse steht. Der Behälter wird aus einem Preformling in einer Blasform geblasen. Dazu wird der Preformling in eine Blasform eingeführt. Sein Einspannbereich im Bereich der Behälteröffnung wird mit einem Formstück zum Formen des Mundstücks des Behälters an der Blasform angepresst. Mit einem Blasstück ist das Mundstück abgedichtet. Ein Streckdorn erstreckt sich durch das Blasstück in den Preformling hinein. Mit dem Streckdorn kann der Preformling gestreckt werden. Er besitzt ausserdem eine Vielzahl von Lufteinlassen, durch die beim Aufblasen des Preformlings zum Behälter Pressluft in den Preformling gepresst wird.

Die Öffnungsachsen des Preformlings und der Blasform sind senkrecht, nämlich parallel zu einer Einführrichtung des Preformling und zu einer Blasformachse gerichtet. Damit die Halsachse des Behälters schliesslich in einem Winkel zur Behälterachse steht, ist eine der Behälterachse entsprechende Hohlraumachse des Blasforminnenraums in einem Winkel zu der Einführrichtung bzw. der Blasformkörperachse geneigt.

Um eine zu dünne Partie im Halsbereich des Behälters zu vermeiden, wird der Behälterteil des Preformlings in Richtung der Hohlraumachse verbogen. Dies kann dadurch geschehen, dass der Preformling vor dem Einführen in die Blasform in einer speziellen Form umgeformt wird. Er kann auch nach dem Einsetzen mit einem Stössel innerhalb der Blasform deformiert werden, oder durch einen gekrümmten Streckdorn auf einer Kreisbahn gestreckt werden.

Bei allen vorgeschlagenen Verfahrensvarianten zum Verformen des Preformlings ist ein zu Einsetzen und Blasen zusätzlicher Verfahrensschritt notwendig. Dieser verlängert die Produktionszeit für einen Behälter.

Es ist somit bekannt, dass bei einem Verfahren zur Herstellung eines Behälters mit einer Öffnung, deren Öffnungsachse in einem Winkel zur Behälterachse steht, ein Preformling in eine Blasform eingeführt wird, ein Einspannbereich des Preformlings gegen einen Anschlagbereich an der Blasform gedrückt und der Preformling in der Blasform pneumatisch verformt wird.

Es ist daher Aufgabe der Erfindung ein Verfahren und eine Vorrichtung vorzuschlagen, mit welchen es möglich ist, insbesondere unter Verwendung von herkömmlichen rotationssymmetrischen Preformlingen, einen Behälter zu blasen, dessen endgültige Öffnungsachse in einem Winkel zur Behälterachse angeordnet ist. Dabei soll die Wandungsstärke des fertigen Behälters in einem Querschnitt quer zur Körperachse annähernd konstant sein. Insbesondere soll dabei die Produktionszeit für einen Behälter möglichst kurz ausfallen.

Diese Aufgabe wird gelöst, indem der Einspannbereich des Preformlings gegen einen zur Einführrichtung des Preformlings in einem von 90° abweichenden Winkel geneigten Anschlagbereich an der Blasform gedrückt wird. Dadurch wird er gleich während dem Einführen und Strecken derart verformt, dass eine Öffnungsteilachse des Preformlings in einem Winkel zu einer Behälterteilachse des Preformlings steht. Somit kann ein die Produktionszeit verlängernder zusätzlicher Verformungsschritt vermieden werden.

Der Winkel zwischen den Achsen des Preformlings ist auf den Winkel zwischen der Öffnungsachse des Behälters und der Behälterachse abgestimmt. Dadurch stehen die Wandung des Behälterteils des in die Blasform eingesetzten Preformlings und der Blasforminnenraum etwa in einem gleichmässigen Abstand zueinander, unabhängig vom Abstand von der Öffnung. Dies erlaubt die Verwendung von wenigstens im Behälterteil rotationssymmetrischen Preformlingen.

Mit einem solchen Verfahren wird insbesondere ein Behälter hergestellt, welcher eine um eine Körperachse herum angeordneter Behälterwandung und einen Behälterboden aufweist, und dessen Behälterboden im Wesentlichen parallel zu einer die Behälterachse in der Regel annähernd rechtwinklig schneidenden Ebene ist. Die Öffnungsachse seiner dem Behälterboden gegenüberliegenden Öffnung steht in einem Winkel zur Körperachse. Derartige Behälter, insbesondere zur Toilettenreinigung vorgesehene Schräghalsflaschen, werden daher vorteilhaft hergestellt, indem ein aus einer thermoplastischen Kunststoffmasse hergestellter Preformling mit einer Wandung, einem Boden und einer vorgeformten Öffnung in einer Blasform aufgeblasen wird. Ein rotationssymmetrischer Preformling wird dabei vor dem Aufblasen des Behälterteils derart verformt, dass eine Achse durch die Öffnung des verformten Preformlings in einem Winkel zur Symmetrieachse der Wandung des Preformlings (Behälterteilachse) steht. Die Behälterteilachse deckt sich bei einem rotationssymmetrischen Preformling mit der ursprünglichen Rotations- oder Symmetrieachse des Preformlings. Dabei ist vorzugsweise der Winkel der Öffnungsachse zur Symmetrieachse der Wandung kleiner oder gleich gross, besonders bevorzugt jedoch gleich gross wie die zu erzielende Abweichung der Öffnungsachse von der Körperachse.

Durch diese Massnahme wird erreicht, dass ein rotationssymmetrischer Preformling verwendet werden kann und die Wandung lediglich im ohnehin stärker ausgebildeten Halsbereich des fertigen Behälters von der Abwinkelung herrührende Wandstärkeunterschiede aufweisen kann. Der fertige Behälter weist in der Wandung und im Boden kaum relevante Wandstärkeunterschiede auf, da mit der vorgängigen Abwinkelung die Wandung des Preformlings diese etwa parallel zu der zu erzielenden Behälterwandung gerichtet wird. Eine Differenz zwischen dem Winkel der Behälterteilachse zur Öffnungsachse des Preformlings und der Hohlraumachse zur Öffnungsachse des Blasforminnenraums kann vorzugsweise bis zu 6 oder, bei niedrigeren Qualitätsansprüchen, gar bis zu 9 Grad ausmachen, ehe die daraus resultierenden Wandstärkeunterschiede die Qualität des Behälters beeinträchtigen.

Bei Behältern, welche gestreckt werden müssen, steht die Streckrichtung zweckmässigerweise orthogonal zur Ausrichtung des orthogonalen und parallelepipedischen Körpers der Blasform. Um eine gegenüber der Körperachse abgewinkelte Öffnungsachse zu erhalten, wird der in die Blasform eingesetzten Preformling in einer Streckrichtung gestreckt, welche in einem Winkel zur Öffnungsachse steht. Ein am Hals des Preformlings ausgebildeter Einspannbereich wird dabei gegen eine Anschlagfläche an der Blasform gedrückt. Die Ebene dieses Anschlagbereichs steht schiefwinklig zu der den Anschlagbereich umgebenden Aussenfläche, bzw. in einem schiefen Winkel zur Ausrichtung des im Wesentlichen prismatischen und orthogonalen Körpers der Blasform und auch zu einer allfälligen Streckrichtung. Bei einem gestreckten Behälter kann der Anschlagbereich auch lediglich zur Streckrichtung in diesem Winkel stehen. Bei einem nicht gestreckten Behälter steht der Anschlagbereich in einem von 90° abweichenden Winkel zur Ebene der den Anschlagbereich umgebenden Aussenfläche des Blasformkörpers, bzw. zur Blasformkörperachse oder zur Körperachse des zu blasenden Behälters, welche der Hohlraumachse des Blasforminnenraums entspricht.

Vorteilhaft wird der Einspannbereich mit einem Andrückteil gegen den Anschlagbereich gepresst. Dieses Andrückteil kann von der Dichtung der Blasdüse getrennt sein, oder vorteilhaft eine Dichtung aufweisen und mit der Blasdüse zusammenfallen. Das Andrücken garantiert den richtigen Sitz des Preformlings in der Form. Die Trennung des Andrückteils der Blasdüse von einem darum herum angeordneten Dichtteil ermöglicht ein schräges Andrücken und ein orthogonales Dichten der Düse. Erstaunlicherweise hat sich aber gezeigt, dass bei einem Andrücken und Dichten mit einem einzigen Teil in einem einzigen Schritt weniger Fehler auftreten.

Dem Verfahren entsprechend weist eine Blasform zur Herstellung eines Behälters mit einer Öffnung, deren Öffnungsachse in einem Winkel zur Behälterachse steht, einen Blasforminnenraum in einem Blasformkörper und einen Anschlagbereich für einen Einspannbereich eines in die Blasform einsetzbaren Preformlings auf. Der Blasforminnenraum entspricht einer Behälteraussenform, und der Anschlagbereich ist in einem von 90° abweichenden Winkel zu einer Blasformkörperachse geneigt. Entsprechend der zu erzielenden Abwinkelung der Öffnung weist die Blasform einen Anschlagbereich für einen Einspannbereich am Hals des Preformlings auf, dessen Ebene in einem von 90° abweichenden Winkel zu der den Anschlagbereich umgebenden Aussenfläche, bzw. in einem um den Winkel zwischen Öffnungsachse und Streckrichtung bzw. Ausrichtung des Blasformkörpers von 90 Grad abweichenden spitzen Winkel zur Ausrichtung des prismatischen Blasformkörpers und der Blasformachse steht. Dabei entspricht der Blasforminnenraum der fertigen Behälteraussenform, und ist diese Abweichung kleiner oder gleich gross wie der Winkel zwischen Öffnungsachse und Körperachse des fertigen Behälters. Der maximale Winkel zwischen Öffnungsachse und Körperachse liegt dabei je nach Ausbildung der Öffnung und Halteart der den Preformling in die Form einlegenden Zange, in einem Bereich bis zu 24°. Diese Blasform ermöglicht das Verformen des Preformlings gleichzeitig mit dessen Einführen in den Blasforminnenraum.

Um grössere Winkel zwischen Behälterachse und Öffnungsachse zu erreichen steht die Hohlraumachse des Blasforminnenraums, welche der Körperachse des in der Blasform geblasenen Behälters entspricht, vorteilhaft in einem Winkel zur Streckrichtung und/oder zur Ausrichtung des im Wesentlichen prismatischen Körpers der Blasform. Dabei ist jedoch zu berücksichtigen, dass die Abweichung der Hohlraumachse von der Streckachse bei durchschnittlichen Flaschenproportionen nicht grösser als etwa 6 Grad sein sollte. Allgemeiner gesagt, sollte die maximale Abweichung der Streckachse oder der Behälterteilachse des Preformlings von der Körperachse des fertigen Behälters nicht mehr als 10 bis 15 % des Behälterdurchmessers in Abweichungsrichtung ausmachen. Noch allgemeiner ausgedrückt sollte das Verhältnis zwischen den auf einer gemeinsamen Senkrechten durch die Streckachse liegenden, einander gegenüberliegenden grössten Abständen des Blasforminnenraums von der Streckachse unter 2 bzw. über ½ liegen.

Das Strecken erfolgt zweckmässigerweise mit einem Streckdorn. Beim Strecken entlang einer geraden Linie (geradliniege Translation des Streckdorns) in einem Winkel zur Öffnungsachse durch die Öffnung des Preformlings hindurch ist dieser Winkel durch die Öffnungsgrösse und den Durchmesser des Streckdorns begrenzt. Um diesen Winkel zu vergrössern, weist der Streckdorn vorteilhaft wenigstens in einer Richtung quer zur Streckdornachse eine wesentlich kleinere Querschnittabmessung auf als der Öffnungsdurchmesser des Preformlings. Dabei ist vorteilhaft die andere Querschnittabmessung quer zur Längsachse des Streckdorns möglichst gross. Alternativ wird der Preformling durch eine Translation des Streckdorns entlang einer gekrümmten Bahn gestreckt. Dies ermöglicht die Verwendung eines Streckdorns mit grösstmöglichem, kreisrundem Querschnitt.

Der Steckdorn kann ganz oder teilweise gekrümmt sein. Die Krümmung kann auch unterschiedliche Radien aufweisen. Er muss in der Folge auf einer Bahn geführt werden, welche dieser Krümmung Rechnung trägt. Diese Bahn kann wiederum verschiedene Radien und Kippbewegungen um verschiedene Punkte aufweisen. Sie muss in Abhängigkeit von der Stellung, d.h. dem Grad des Vortriebes des Streckdornes, und in Abhängigkeit der Form und dem Grad des Aufblasens des Behälters ausgelegt sein. Dabei muss berücksichtigt werden, dass der Streckdorn weder die Preformlingwandung noch den Öffnungsbereich des Preformlings berührt. Die Bahn der Spitze des Streckdorns muss selbstverständlich vollständig innerhalb des Blasforminnenraums liegen. Daher muss die Bahn auf die Behälterform abgestimmt sein. Mit einem derart nicht geradlinig geführten Streckdorn kann jedoch die Öffnungsachse in einem grösseren Winkel zur Behälterachse stehen als mit einem geradlinig geführten Streckdorn.

Das für die Herstellung des Preformlings und des Behälters bevorzugte thermoplastische Material ist PET (Polyethylenterephtalat). Auch PEN (Polyethylennaphtalat) und andere Kunststoffe werden eingesetzt.

Bei einer Blasform ist der Anschlagbereich schräg zur Blasformkörperachse oder der den Anschlagbereich umgebenden, zum Blasformkörper orthogonalen Aussenfläche des Blasformkörpers gerichtet. Insbesondere weist die Blasform einen Anschlagbereich für einen Einspannbereich am Hals des Preformlings auf, dessen Ebene in einem spitzen Winkel von weniger als 90° zur Ausrichtung des Blasformkörpers steht, wobei die Abweichung vom rechten Winkel kleiner als der Winkel zwischen der Öffnungsachse und der Behälterachse des fertigen Behälters ist oder diesem Winkel entspricht. Der Blasforminnenraum weist die schräge Halsachse auf. Ist an einer Blasvorrichtung mit einer solchen Blasform eine Einrichtung zum Strecken des Preformlings vorgesehen, z.B. ein Streckdom, so steht die Streckrichtung in einem Winkel zur Öffnungsachse des Blasforminnenraums. Die Ebene des Anschlagsbereichs ist in einem schiefen Winkel zur Streckrichtung, d.h. zur Translationsrichtung eines geradlinig vorgeschobenen Streckdorns angeordnet. Dies ermöglicht das direkte Blasen von sogenannten Schräghalsflaschen aus einem Preformling mit rotationssymmetrischer Wandung in einer Blasform und mit einem geraden Streckdorn. Die Wandung des Preformlings wird durch den in einem Winkel zur Öffnungsachse in den Preformling eingeführten Streckdorn etwa zentrisch in den Blasforminnenraum hinein gestreckt.

Zweckmässigerweise weist die Blasdüse ein bewegliches Innenteil zum Andrücken des Preformlings an die Anschlagfläche und ein gegenüber diesem bewegliches äusseres Dichtteil zum Dichten der Düse am Blasformkörper auf. Dadurch kann die Andrückfunktion und die Dichtfunktion getrennt und zeitlich nacheinander ausgeführt werden. Insbesondere kann das Andrücken in einer anderen Ebene geschehen als das Dichten. Diese beiden Ebenen können schiefwinklig zueinander stehen. Vorteilhaft ist die Blasdüse jedoch mit einer Dichtung ausgestattet und dichtet auf dem Öffnungsrand des Preformlings.

In einer vorteilhaften Weiterentwicklung steht die Längsachse des Blasforminnenraums in einem Winkel zur Streckrichtung und/oder zur Ausrichtung des Blasformkörpers und seiner Blasformkörperachse. Dies ermöglicht, dass die Längsachse des Blasforminneraums in einem Winkel zur Öffnungsachse steht, der grösser ist als der Winkel zwischen Öffnungsteilachse des Preformlings und Behälterteilachse oder Streckachse. Dadurch sind grössere Winkel zwischen Öffnungsachse und Körperachse des Behälters möglich.

Bei einer Blasvorrichtung mit einer Blasform und Mitteln zum Einleiten eines Überdruckes in den Preformling sind auch eine Transportvorrichtung zum Einsetzen bzw. Herausnehmen eines Preformlings vorgesehen. Eine Blasform mit einem in der Blasform eingesetzten Preformling mit rotationssymmetrischer Wandung ist erfindungsgemäss dadurch gekennzeichnet, dass die Behälterteilachse des Behälterteils des Preformlings einen Winkel zur Öffnungsachse eines der fertigen Behälteraussenform entsprechenden Blasforminnenraums einnimmt. Gleichzeitig kann die Öffnungsachse einen Winkel zu einer Längsachse eines entlang dieser Längsachse verfahrbaren Streckdorns einnehmen, nämlich wenn ein um die Öffnung vorgesehener Einspannbereich des Preformlings an der Blasform anliegt oder gegen den Anschlagbereich gedrückt wird. Der ganze Preformling ist beim Einsetzen noch rotationssymmetrisch ausgebildet. Die Öffnungsachse ist vorerst parallel zur Streckdornlängsachse ausgerichtet, bis der Streckdorn in den Preformling soweit eingeführt ist, dass dessen Behälterteil in seiner Lage durch den Streckdorn gesichert ist. Ist der Streckdom in den Preformling eingeführt und der Behälterbereich dadurch gerichtet und in der Richtung festgehalten, wird vorteilhaft mit einem Andrückteil der Einspannbereich des Preformlings an die Blasform angedrückt. Durch Strecken und Andrücken wird die Öffnungsachse gegenüber der Behälterteilachse abgeknickt. Es wird dabei zuerst einseitiger Druck auf den Einspannbereich ausgeübt und dadurch die Öffnungsachse abgewinkelt. Liegt der Einspannbereich am Anschlagbereich an, so liegt das Andrückteil symmetrisch am Preformling an. Strecken und Andrücken erfolgt vorteilhaft synchron bis zu dem Moment, in welchem das Andrückteil den Einspannbereich fest an den Anschlagbereich presst. Danach wird der Streckvorgang ohne Unterbruch fortgesetzt und gleichzeitig der Preformling aufgeblasen. Für das erfindungsgemässe Verfahren sind axial geformte, rotationssymmetrische Preformlinge mit gleichmässig dicker Wandung verwendbar.

Im Folgenden ist die Erfindung anhand schematischer Schnitte durch Blasvorrichtungen näher erläutert. Es zeigt
- Figur 1:: eine Blasvorrichtung mit parallel zur Flaschenachse eingeführtem Preformling,
- Figur 2:: eine Blasvorrichtung mit darin eingeführtem und danach abgeknicktem Preformling,
- Figur 3:: eine Blasvorrichtung mit abgeknicktem Preformling und relativ zum Blasformkörper schräg gestelltem Blasforminnenraum,
- Figur 4:: eine Blasvorrichtung gemäss den Figuren 1 bis 3, mit in der Form geblasener Schräghalsflasche,
- Figur 5:: eine Blasvorrichtung ohne Streckdorn.

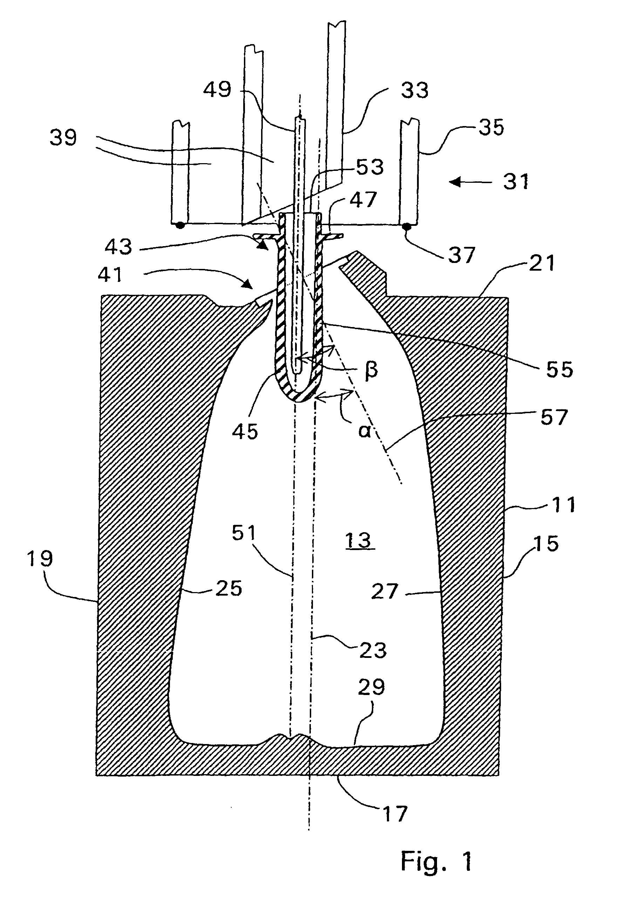

Die Blasvorrichtungen gemäss Figuren 1 bis 5 weisen eine Blasform 11 mit einem Blasforminnenraum 13 auf. Der Blasformkörper 11 ist im Wesentlichen prismatisch. Er besitzt zueinander orthogonal ausgerichtete Aussenflächen 15,17,19,21. Der Blasforminnenraum 13 bildet die Negativform eines Flaschenkörpers. Diese Negativform 13 ist die Begrenzungsfläche beim Blasen der Flasche. Ihr kann eine Behälter- oder Hohlraumachse 23 zugeordnet werden. Die Behälterachse liegt einigermassen zentrisch zwischen den Wandungsabschnitten 25,27 und etwa senkrecht zum Bodenabschnitt 29 der Negativform 13.

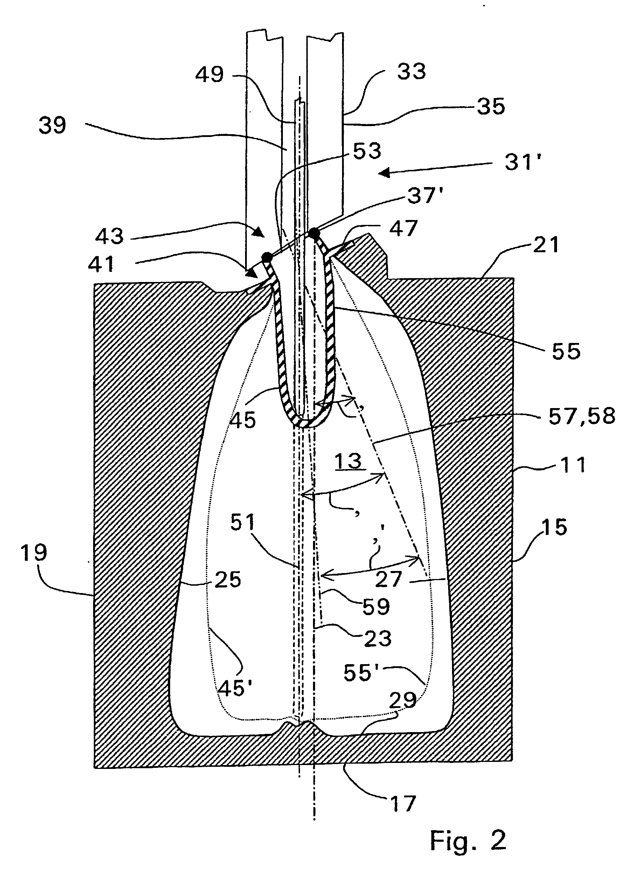

Die Teile der Blasdüse 31 sind praktisch orthogonal zum Blasformkörper 11 und parallel zu einer Blasformkörperachse beweglich. Dies ist insbesondere rechtwinklig zur Blasformkörperseite 21, in welcher sich die Öffnung 43 befindet. Die Blasdüse 31 besitzt in einer Ausführungsform (Fig. 1,3,4,5) ein inneres Andrückteil 33 und ein äusseres Dichtteil 35. Das Dichtteil kann mit einem Dichtring 37 auf der Aussenfläche 21 des Blasformkörpers 11 dicht abschliessen. Der Dichtring 37 wird dazu vom Dichtteil 35 senkrecht auf die Aussenfläche 21 gepresst. Innerhalb des so abdichtbaren Druckraumes 39 kann dann zum Blasen der Flasche ein Druck aufgebaut werden. In einer anderen Ausführungsform (Figur 2) ist die Blasdüse 31' Dichtteil und Andrückteil in einem. Sie drückt mit einer Dichtung gegen den Öffnungsrand der Preformlingöffnung 53.

An der Blasform 11 ist ein in einem Winkel zur Aussenfläche 21 ausgerichteter Anschlagbereich 41 ausgebildet. Der Anschlagbereich 41 ist im Umfeld der Öffnung 43 der Blasform 11 angeordnet. Durch die Öffnung 43 kann ein Preformling 45 in den Blasforminnenraum 13 eingeführt werden. Am Preformling 45 ist ein Einspannbereich in Form eines Stützringes 47 ausgebildet. Die Formen von Stützring 47 und Anschlagbereich 41 sind aufeinander abgestimmt. Das Ende des Andrückteils 33 der Blasdüse 31 ist an die Schräglage des Anschlagbereiches 41 bezüglich der Bewegungsrichtung des Andrückteils angepasst.

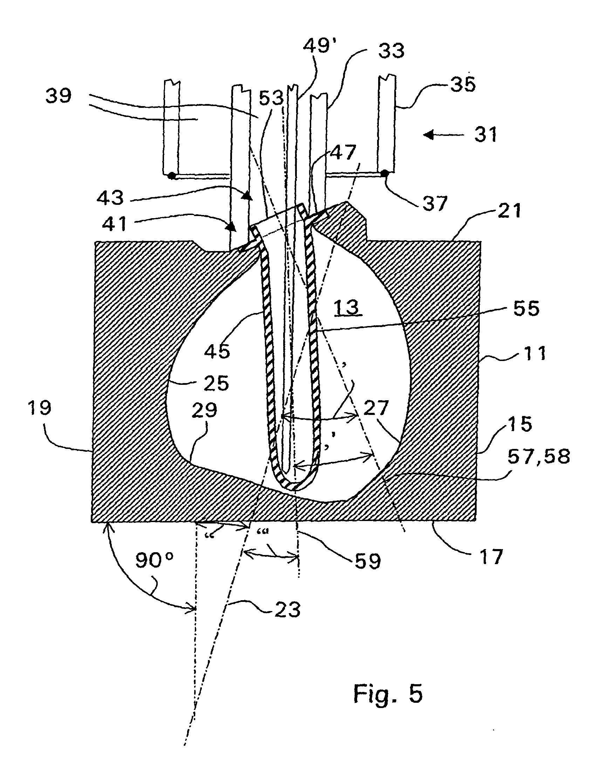

In den Figuren 1 bis 4 ist in der Blasdüse 31 jeweils ein Streckdorn 49 vorgesehen. Dieser ist entlang seiner Längsachse 51 durch die Öffnung 53 des Preformlings 45 in diesen einführbar. Mit dem Streckdorn 49 kann der Preformling 45 bis in die Nähe des Bodenabschnitts 29 gestreckt werden. In Figur 5 ist ein Ausführungsbeispiel gezeigt, welches es erlaubt, den Preformling 45 nicht zu strecken. Daher ist im Beispiel gemäss Figur 5 auf einen Streckdom verzichtet worden. Dafür ist ein Haltedorn 49' vorgesehen, damit der Öffnungsteil des Preformlings gegenüber dem durch den Haltedorn gehaltenen Behälterteil abgeknickt werden kann.

In der Figur 1 ist der ganze Preformling 45 rotationssymmetrisch ausgebildet. Seine Wandung 55 ist umlaufend gleich stark. Der unverformte Preformling 45 wird etwa in Achsrichtung der Streckdornachse 51 durch die gegenüber der Streckdornachse 51 schräge Öffnung 43 der Blasform 11 in diese eingeführt und weiterhin mit einer Zange festgehalten. Der Streckdorn 49 wird in die Öffnung 53 des Preformlings 45 eingeführt, so dass die Ausrichtung der Wandung 55 des Preformlings dadurch gesichert ist. Nun wird die Zange gelöst und es beginnt der Streck- und Anpressvorgang. Anstelle des Haltens des Preformlings bis nach dem Einführen des Streckdorn (oder Haltedorns), kann die Anschlagfläche auf einer schwenkbaren Platte ausgebildet sein, welche z.B. mit einer Feder in einer zur Blasform orthogonalen Lage gehalten ist und beim Anpressen des Preformlings in die angestrebte Lage, insbesondere entgegen der Federkraft, verschwenkt wird. Anstelle einer Feder kann auch ein Antrieb vorgesehen sein. Dieser ermöglicht ein aktives Verstellen der Platte, zweckmässigerweise in Abstimmung mit der Streckdorn und Blasdüsenbewegung.

Die Streckdornbewegungsrichtung, die Dichtteil- und Andrückteilbewegungsrichtungen, die Blasformachse und die Einführrichtung für den Preformling sind in der Praxis parallel gerichtet und orthogonal zum Blasformkörper 11. Die Abwinkelung der Öffnungsachse 57 gegenüber der Streckdornachse 51 wird erreicht, indem das Andrückteil 33 gegen den Anschlagbereich 41 geführt wird. Dabei wird der Öffnungsteil gegenüber der Wandung 55 des Preformlings abgeknickt, indem das Andrückteil 33 und der Anschlagbereich 41 an gegenüberliegenden Punkten des Stützrings 47 in entgegengesetzter Richtung Druck auf den Öffnungsteil ausüben und der in den Preformling eingeführte Streckdorn die Richtung der Wandung fixiert. Sobald der Stützring am Anschlagbereich anliegt, wird der Druckraum 39 mit dem Dichtteil 35 dicht gemacht und der Preformling 45 zur Schräghalsflasche aufgeblasen.

In Figur 2 ist eine andere Blasdüse 31' dargestellt als in den übrigen Figuren. Diese vorteilhafte Blasdüse benötigt nicht zwei separate Teile zum Dichten und Anpressen, sondern dichtet mit einer Dichtung direkt am Öffnungsrand des Preformlings sobald dieser am Anschlagbereich anliegt. Gleichzeitig mit dem beginnenden Strecken des Preformlings wird mit der Blasdüse 31' Druck auf den Öffnungsrand des Preformlings 45 ausgeübt. Dieser kann vorerst nur einseitig ausgeübt werden, während an der gegenüberliegenden Seite des Öffnungsteils dieses auf dem schrägen Anschlagbereich 41 der Blasform 11 anliegt. Nach beendetem Anpressvorgang liegt der Einspannbereich ganz am Anschlagbereich an. Von diesem Moment an dichtet die Dichtung der Blasdüse am Preformling. Sofort wird der Aufblasvorgang begonnen, so dass dieser parallel mit dem ununterbrochenen Streckvorgang ausgeführt und vollendet wird.

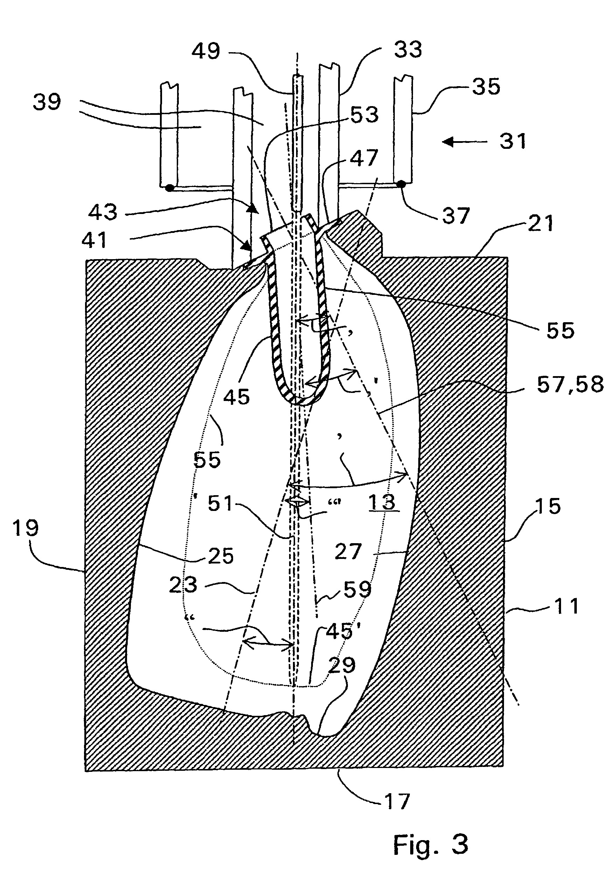

In Figur 3 ist die Behälterachse oder Hohlraumachse 23 nicht orthogonal zum Blasformkörper 11, bzw. nicht rechtwinklig zur Blasformkörperseite 21, gerichtet. Sie steht in einem Winkel γ zur Streckdornlängsachse 51 und zur Ausrichtung des Blasformkörpers 11, bzw. seiner Körperachse. Die senkrecht zur Ebene des Anschlagbereichs 41 stehende Öffnungsachse 57 steht daher in einem Winkel α zur Behälterachse 23, welcher der Summe von γ und β entspricht. β ist dabei der Winkel zwischen der Längsachse 51 des Streckdorns 49 oder der Ausrichtung des Blasformkörpers 11 und der Öffnungsachse 57. Die Abweichung der Streckdornlängsachse 51 von der Parallelen zur Behälterachse von γ ist beim Blasen verträglich, solange die Distanzunterschiede zwischen der gestreckten Wandung 55' des Preformlings 45' und den entsprechenden Wandabschnitten 25,27 des Blasforminnenraums 13 innerhalb eines bestimmten Toleranzbereichs liegen. Bei Überschreiten dieses Toleranzbereichs wird die Unterschiedlichkeit der Wandstärken in den verschiedenen Bereichen zu gross.

Wie z.B. aus der Figur 2 ersichtlich ist, kann auch bei paralleler Ausrichtung von Streckdornlängsachse 51 und Behälterachse 23 eine Differenz bei den Abständen zwischen Preformlingwandung 55' und Blasforminnenraum 13 bestehen. Die Flasche muss auch nicht rotationssymmetrisch um die Behälterachse ausgelegt sein. In diesem bekannten Mass an tolerierbaren Abstandsunterschieden liegt auch die durch die nicht orthogonale Ausrichtung der Behälterachse bedingte Abweichung in der Figur 3. Die Abweichung ist im Mittel durch die Schrägstellung der Behälterachse 23 sogar verkleinert. Der grössere Abstand je nach Behälterform kann bei entsprechender Kompensation durch ungleichmässige Erwärmung des Preformlings bis gegen 200% des kleineren ausmachen, ohne dass die resultierenden Wandstärkeunterschiede störend sind. Vorteilhaft übersteigt dieser Unterschied jedoch nicht 150 %.

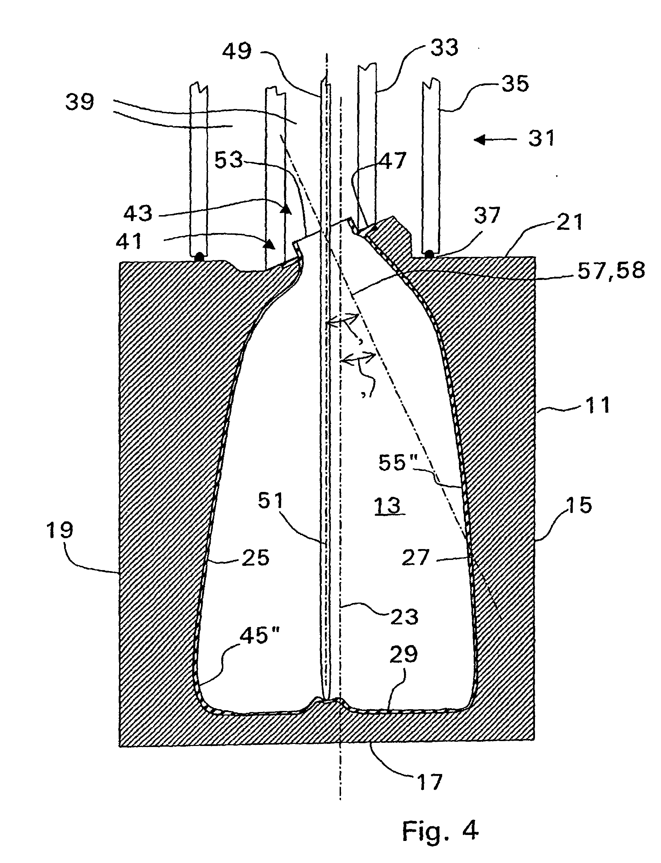

In Figur 4 ist die Schräghalsflasche 45" aufgeblasen. Zum Aufblasen muss das Dichtteil 35 der Blasdüse 31 dicht an die öffnungsseitige Aussenfläche 21 des Blasformkörpers 11 angepresst und der Preformling 45 mit dem Andrückteil 33 gegen den Anschlagbereich 41 gehalten werden. Dann kann der Druckraum 39 unter Überdruck gesetzt werden und der Preformling 45 dadurch zur Schräghalsflasche 45" aufgeblasen werden. Aus Figur 4 ist auch ersichtlich, dass der Streckdorn 49 wesentlich schmaler als die Öffnungsweite der Flasche sein muss. Durch den Winkel β zwischen Streckdornlängsachse 51 und Öffnungsachse 57 und durch das Verhältnis zwischen Öffnungsweite und der Länge des Öffnungshalses in Richtung der Öffnungsachse 57 ist die Abmessung des Streckdorns 49 in der einen Richtung beschränkt. In der anderen Richtung ist, insbesondere bei kleinen Winkeln, im Wesentlichen die Öffnungsweite massgebend. Somit weist der Streckdorn vorteilhaft keinen kreisrunden, sondern einen ovalen, elliptischen oder fischblasenartigen Querschnitt auf.

In Figur 5 ist die Flaschenform dergestalt, dass auf ein Strecken des Preformlings 45 verzichtet werden kann. Damit der Preformling 45 jedoch trotz Schräghalsausbildung an der Flaschenblasform 11 etwa zentral im Blasforminnenraum 13 angeordnet ist, wird der Behälterteil mit einem Haltedorn 49' festgehalten, während der Öffnungsteil durch den Andrückteil 33 der Blasdüse 31 allein abgeknickt wird.

In den Figuren scheint der Winkel zwischen Andrückteil 33 und Öffnungsachse 57 kritisch zu sein, da der von der Blasdüse 31 weggewandte Teil des Stützrings 47 ab einem gewissen Winkel in einem Bereich liegt, welcher wegen der über den Stützring 47 vorstehenden Öffnungsrand 53 des Preformlings 45 durch das Andrückteil 33 nicht mehr gegen den Anschlagbereich 41 gedrückt werden kann. Eine einteilige Blasdüse 31' oder ein Andrückteil 33, die oder das gegen den Öffnungsrand pressen, kennt dieses Problem nicht. Weiter kann die Blasdüse, entgegen der Darstellung in den Figuren 1 bis 5, auch schräg auf die Blasform gesetzt werden. Um grössere Abwinkelungen der Öffnungsachse zu erreichen, kann der Streckdorn auch auf einer Kreisbahn in den Preformling 45 eingeführt werden. Dazu ist es notwendig, die Blasdüse 31 entsprechend abzuändern. Es kann dabei Andrückteil 33 und Dichtteil 35 auch zusammenfallen.

Der Einspannbereich 47 des Preformlings 45 wird beim Einführen des Preformlings 45 in eine der Blasformen 11,13 gemäss Figuren 1 bis 5 gegen einen zur Einführrichtung des Preformlings 45 in einem von 90° abweichenden Winkel geneigten Anschlagbereich 41 an der Blasform 11,13 gedrückt. Dadurch wird er gleich während dem Einführen und Strecken derart verformt, dass eine Öffnungsteilachse 58 des Preformlings 45,45' in einem Winkel zu einer Behälterteilachse 59 des Preformlings steht. Der Winkel β' zwischen den Achsen 58,59 des Preformlings 45,45' ist auf den Winkel β zwischen der Öffnungsachse 57 des Behälters und der Behälterachse 23 abgestimmt.

## Patentansprüche

1. Verfahren zur Herstellung eines Behälters (45") mit einer Öffnung (53), deren Öffnungsachse (57) in einem Winkel zur Behälterachse (23) steht, bei welchem Verfahren ein Preformling (45) in eine Blasform (11,13) eingeführt, ein Einspannbereich (47) des Preformlings (45) gegen einen Anschlagbereich (41) an der Blasform gedrückt und der Preformling in der Blasform pneumatisch verformt wird, **dadurch gekennzeichnet, dass** der Einspannbereich (47) des Preformlings (45) gegen einen Anschlagbereich (41) an der Blasform gedrückt wird, der zur Einführrichtung des Preformlings (45) in einem von 90° abweichenden Winkel geneigt ist, und der Preformling (45) dadurch derart verformt wird, dass eine Öffnungsteilachse (58) des Preformlings (45,45') in einem Winkel zu einer Behälterteilachse (59) des Preformlings (45,45') steht.

2. Verfahren nach Anspruch 1, **dadurch gekennzeichnet, dass** die Ausrichtung der Wandung (55) eines Behälterteils des Preformlings (45) in der Blasform (11) durch einen Streckdorn (49) oder einen Haltedorn (49') fixiert wird.

3. Verfahren nach Anspruch 1 oder 2, **dadurch gekennzeichnet, dass** der Preformling (45) mittels eines Streckdorns (49) in einer Streckrichtung (51) gestreckt wird, welche in einem Winkel zur Öffnungsachse (57) der Blasform steht.

4. Verfahren nach Anspruch 3, **dadurch gekennzeichnet, dass** der Preformling (45) durch eine zur Öffnungsachse (57) geneigte, geradlinige Translation des Streckdorns (49) gestreckt wird, und der Streckdorn (49) wenigstens in einer Richtung eine wesentlich kleinere Querschnittabmessung aufweist als der Öffnungsdurchmesser des Preformlings (45).

5. Verfahren nach Anspruch 3, **dadurch gekennzeichnet, dass** der Preformling (45) durch eine gekrümmte Translation des Streckdorns (49), z.B. entlang einer Kreisbahn, gestreckt wird, wobei der Streckdorn (49) entlang seiner Längsachse wenigstens teilweise entsprechend gekrümmt ist.

6. Blasform zur Herstellung eines Behälters (45") mit einer Öffnung (53), deren Öffnungsachse (57) in einem Winkel zur Behälterachse (23) steht, welche Blasform (11) einen Blasforminnenraum (13) in einem Blasformkörper (11) und einen Anschlagbereich (41) für einen Einspannbereich (47) eines in die Blasform (11,13) einsetzbaren Preformlings (45) aufweist, wobei der Blasforminnenraum (13) einer Behälteraussenform entspricht, **dadurch gekennzeichnet, dass** der Anschlagbereich (41) in einem von 90° abweichenden Winkel zu einer Blasformkörperachse geneigt ist.

7. Blasform nach Anspruch 6, **dadurch gekennzeichnet, dass** der Anschlagbereich (41) für den Proformling (45) an einer gegenüber dem Blasformkörper (11) schwenkbaren Platte ausgebildet ist.

8. Blasform nach Anspruch 7, **dadurch gekennzeichnet, dass** die Blasform (11,13) mit Federmitteln oder aktiven Verstellmitteln versehen ist, um eine Bewegung der Platte von einer zur Blasformkörperachse orthogonalen Einlegestellung in eine zur Blasformkörperachse geneigten Blasstellung und/oder in umgekehrter Richtung zu verschwenken.

9. Blasvorrichtung mit einer Blasdüse (31) und einer Blasform (11,13), **dadurch gekennzeichnet, dass** die Blasform (11,13) gemäss einem der Ansprüche 6 bis 8 ausgebildet ist, und dass die Blasdüse (31) ein bewegliches Innenteil (33) zum Andrücken des Preformlings (45) an den Anschlagbereich (41) und ein davon separat bewegliches äusseren Dichtteil (35) zum Dichten der Düse (31) an der dem Anschlagbereich (41) umgebenden Aussenfläche (21) des Blasformkörpers (11) aufweist.

10. Blasvorrichtung mit einer Blasdüse (31) und einer Blasform (11,13), **dadurch gekennzeichnet, dass** die Blasform gemäss einem der Ansprüche 6 bis 8 ausgebildet ist, und dass die Blasdüse (31) eine Dichtung (37') aufweist und die Ebene der Dichtung (37') in einem von 90° abweichenden Winkel zur Blasformkörperachse geneigt und parallel zur Ebene des Anschlagbereichs (41) ausgerichtet ist.

11. Blasvorrichtung nach einem der Ansprüche 9 oder 10, **gekennzeichnet durch** eine Einrichtung (49) zum Strecken des Preformlings (45) in einer Streckrichtung (51), welche Streckrichtung (51) in einem Winkel zur Öffnungsachse (57) des Blasforminnenraums (13) steht.

12. Blasvorrichtung nach einem der Ansprüche 9 bis 11, **dadurch gekennzeichnet, dass** die Hohlraumachse (23) des Blasforminnenraums (13) in einem Winkel zur Streckrichtung (51) oder zur Blasformkörperachse steht.

13. Blasvorrichtung nach einem der Ansprüche 9 bis 12, **dadurch gekennzeichnet, dass** die Hohlraumachse (23) des Blasforminnenraums (13) zu orthogonalen Aussenflächen (15,17,19,21) des Blasformkörpers (11) in einem von 0° und 90° abweichenden Winkel geneigt ist.

14. Blasvorrichtung nach Anspruch 11, **dadurch gekennzeichnet, dass** die Hohlraumachse (23) des Blasforminnenraums (13) parallel zu Streckrichtung (51) und Blasformkörperachse ist.

## Claims

1. Method for the production of a container (45") with an opening (53), the opening axis (57) of which extends at an angle to the container axis (23), in which method a blank (45) is inserted into a blow mold (11, 13), a fixing region (47) of the blank (45) is pressed against a stop zone (41) on the blow mold, and the blank is pneumatically molded in the blow mold, **characterized in that** the fixing region (47) of the blank (45) is pressed against a stop zone (41) on the blow mold, which is enclined relative to the insertion direction of the blank (45) at an angle other than 90°, and the blank (45) is thereby molded in such a way that an opening axis (58) of the blank (45, 45') extends at an angle to the container axis (59) of the blank (45, 45').

2. Method according to claim 1, **characterized in that** the orientation of the walls (55) of a container part of the blank (45) is fixed in the blow mold (11) by means of a stretching pin (49), or a retaining pin (49').

3. Method according to claim 1 or 2, **characterized in that** the blank (45) is stretched by means of a stretching pin (49) in a stretching direction (51), which extends at an angle to the opening axis (57) of the blow mold.

4. Method according to claim 3, **characterized in that** the blank (45) is stretched by a straight-line translation of the stretching pin (49) and tilted toward the opening axis (57), and the stretching pin (49) has, at least in one direction, a substantially smaller cross sectional diameter than the opening diameter of the blank (45).

5. Method according to claim 3, **characterized in that** the blank (45) is stretched by a curved translation of the stretching pin (49), for instance along a circular path, whereby the stretching pin (49) is bent accordingly at least partially along its longitudinal axis.

6. Blow mold for the production of a container (45") with an opening (53), the opening axis (57) of which extends at an angle to the container axis (23), which blow mold (11) has a blow mold cavity (13) in a blow mold body (11), and a stop zone (41) for a fixing region (47) of a blank (45) to be inserted into the blow mold (11, 13), whereby the blow mold cavity (13) corresponds to an outer shape of a container, **characterized in that** the stop zone (41) is inclined at an angle other than 90° with respect to a blow mold body axis.

7. Blow mold according to claim 6, **characterized in that** the stop zone (41) for the blank (45) is located on a plate which is pivotable relative to the blow mold body (11).

8. Blow mold according to claim 7, **characterized in that** the blow mold (11, 13) is equipped with spring means, or active adjusting means for pivoting a movement of the plate from an insertion position which is orthogonal to the blow mold body axis into a blowing position which is tilted to the blow mold body axis, and/or in reverse direction.

9. Blowing device with a blowing nozzle (31) and a blow mold (11, 13), **characterized in that** the blow mold (11, 13) is designed according to one of claims 6 to 8, and that the blowing nozzle (31) comprises a movable interior piece (33) for pressing the blank (45) onto the stop zone (41), and a separately movable exterior sealing piece (35) for sealing the nozzle (31) onto the outer surface (21) of the blow mold body (11) surrounding the stop zone (41).

10. Blowing device with a blowing nozzle (31) and a blow mold (11, 13),**characterized in that** the blow mold is designed according to one of claims 6 to 8, and that the blowing nozzle (31) has a seal (37'), and the sealing surface of the seal (37') is inclined at an angle to the blow mold body axis other than 90°, and extends parallel to the plane of the stop zone (41).

11. Blowing device according to one of the claims 9 or 10, **characterized by** a device (49) for stretching of the blank (45) in a stretching direction (51), which stretching direction (51) is at an angle to the opening axis (57) of the blow mold cavity (13).

12. Blowing device according to one of claims 9 to 11, **characterized in that** the axis (23) of the blow mold cavity (13) extends at an angle to the stretching direction (51), or to the blow mold body axis.

13. Blowing device according to one of the claims 9 to 12, **characterized in that** the hollow space axis (23) of the blow mold cavity (13) is inclined at an angle other than 0° and 90° to the orthogonal outer surfaces (15, 17,19, 21) of the blow mold body (11).

14. Blowing device according to claim 11, **characterized in that** the axis (23) of the blow mold cavity (13) extends parallel to the stretching direction (51) and the blow mold body axis.

## Revendications

1. Procédé pour la fabrication d'un récipient (45") avec une ouverture (53) dont l'axe d'ouverture (57) se trouve dans un angle par rapport à l'axe du récipient (23), procédé pour lequel une pièce brute préformée (45) est introduite dans un moule de soufflage (11, 13), une zone de serrage (47) de la pièce brute préformée (45) est pressée contre une zone de butée (41) sur le moule de soufflage et la pièce brute préformée est déformée pneumatiquement dans le moule de soufflage, **caractérisé en ce que** la zone de serrage (47) de la pièce brute préformée (45) est pressée contre une zone de butée (41) sur le moule de soufflage qui est inclinée par rapport au sens d'introduction de la pièce brute préformée (45) dans un angle qui diffère de 90° et la pièce brute préformée (45) est déformée de telle manière qu'un axe de partie d'ouverture (58) de la pièce brute préformée (45, 45') est dans un angle par rapport à un axe de la partie de récipient (59) de la pièce brute préformée.

2. Procédé selon la revendication 1, **caractérisé en ce que** l'orientation de la paroi (55) d'une partie de récipient de la pièce brute préformée (45) est fixée dans le moule de soufflage (11) par un mandrin d'étirage (49) ou un mandrin de maintien (49').

3. Procédé selon la revendication 1 ou 2, **caractérisé en ce que** la pièce brute préformée (45) est étirée au moyen d'un mandrin d'étirage (49) dans un sens d'étirage (51) qui est dans un angle par rapport à l'axe d'ouverture (57) du moule de soufflage.

4. Procédé selon la revendication 3, **caractérisé en ce que** la pièce brute préformée (45) est étirée par une translation du mandrin d'étirage (49) en ligne droite, inclinée par rapport à l'axe d'ouverture (57) et le mandrin d'étirage (49) présente une dimension de section transversale substantiellement plus petite que le diamètre d'ouverture de la pièce brute préformée (45) au moins dans un sens.

5. Procédé selon la revendication 3, **caractérisé en ce que** la pièce brute préformée (45) est étirée par une translation courbe du mandrin d'étirage (49), par exemple le long d'une trajectoire circulaire, le mandrin d'étirage (49) étant courbé de manière correspondante au moins partiellement le long de son axe longitudinal.

6. Moule de soufflage pour la fabrication d'un récipient (45") avec une ouverture (53) dont l'axe d'ouverture (57) se trouve dans un angle par rapport à l'axe du récipient (23), moule de soufflage (11) qui présente un espace intérieur de moule de soufflage (13) dans un corps de moule de soufflage (11) et une zone de butée (41) pour une zone de serrage (47) d'une pièce brute préformée (45) pouvant être mise en place dans le moule de soufflage (11, 13), l'espace intérieur du moule de soufflage (13) correspondant à une forme extérieure du récipient, **caractérisé en ce que** la zone de butée (41) est inclinée dans un angle différent de 90° par rapport à l'axe du corps du moule de soufflage.

7. Moule de soufflage selon la revendication 6, **caractérisé en ce que** la zone de butée (41) pour la pièce brute préformée (45) est configurée sur une plaque pivotante par rapport au corps de moule de soufflage (11).

8. Moule de soufflage selon la revendication 7, **caractérisé en ce que** le moule de soufflage (1, 13) est pourvu de moyens à ressort ou de moyens de réglage actifs pour faire pivoter un mouvement de la plaque d'une position de mise en place orthogonale par rapport à l'axe du corps du moule de soufflage dans une position de soufflage inclinée par rapport à l'axe du corps du moule de soufflage et/ou en sens inverse.

9. Dispositif de soufflage avec une buse de soufflage (31) et un moule de soufflage (11, 13), **caractérisé en ce que** le moule de soufflage (11, 13) est configuré conformément à l'une des revendications 6 à 8 et que la buse de soufflage (61) présente une partie intérieure mobile (33) pour presser la pièce brute préformée (45) contre la zone de butée (43) et une pièce d'étanchéité extérieure (35) séparée de celle-ci pour étancher la buse (31) sur la surface extérieure (21) du corps du moule de soufflage (11) qui entoure la zone de butée (41).

10. Dispositif de soufflage avec une buse de soufflage (31) et un moule de soufflage (11, 13), **caractérisé en ce que** le moule de soufflage est configuré conformément à l'une des revendications 6 à 8 et que la buse de soufflage (31) présente une étanchéité (37') et le plan de l'étanchéité (37') est incliné par rapport à l'axe du corps du moule de soufflage dans un angle différent de 90° et orienté parallèlement au plan de la zone de butée (41).

11. Dispositif de soufflage selon l'une des revendications 9 ou 10, **caractérisé par** un dispositif (49) pour étirer la pièce brute préformée (45) dans un sens d'étirage (51), lequel sens d'étirage (51) est dans un angle par rapport à l'axe d'ouverture (57) de l'espace intérieur du moule de soufflage (13).

12. Dispositif de soufflage selon l'une des revendications 9 à 11, **caractérisé en ce que** l'axe d'espace creux (23) de l'espace intérieur du moule de soufflage (13) est dans un angle par rapport au sens d'étirage (51) ou par rapport à l'axe du corps du moule de soufflage.

13. Dispositif de soufflage selon l'une des revendications 9 à 12, **caractérisé en ce que** l'axe de l'espace creux (23) de l'espace intérieur du moule de soufflage (13) est incliné par rapport aux surfaces extérieures orthogonales (15, 17, 19, 21) du corps du moule de soufflage (11) dans un angle différent de 0° et de 90°.

14. Dispositif de soufflage selon la revendication 11, **caractérisé en ce que** l'axe de l'espace creux (23) de l'espace intérieur du moule de soufflage (13) est parallèle au sens d'étirage (51) et à l'axe du corps du moule de soufflage.
